# EUROPEAN PATENT SPECIFICATION

(11) **EP 0 762 603 B1**
(45) Date of publication and mention of the grant of the patent: **15.03.2000**
(21) Application number: 96112456.7
(22) Date of filing: 01.08.1996
(51) Int. Cl.: H02K 3/28, H02K 3/26

(54) **Rotary electric machine for vehicle**
Elektrische Drehmaschine für Fahrzeuge
Machine électrique rotative pour véhicule

(30) Priority: 08.08.1995 JP 20190395
(43) Date of publication of application: 12.03.1997
(73) Proprietor: DENSO CORPORATION, Kariya-City, Aichi-Pref. (JP)
(72) Inventor: Umeda, Atsushi, Kariya-city, Aichi-pref. 448 (JP); Kawai, Junji, Kariya-city, Aichi-pref. 448 (JP)
(74) Representative: Winter, Brandl, Fürniss, Hübner, Röss, Kaiser, Polte, Kindermann Partnerschaft

(56) References cited:
- FR-A- 1 460 142
- GB-A- 2 273 394
- PATENT ABSTRACTS OF JAPAN vol. 018, no. 493 (E-1606), 14 September 1994 & JP 06 165422 A (NIPPONDENSO CO LTD), 10 June 1994,

## Description

### BACKGROUND OF THE INVENTION

### 1. Field of the Invention

The present invention relates to a rotary electric machine for a vehicle, such as an alternator for supplying electric power to electric devices mounted on the vehicle and charging a battery mounted on the vehicle, and more particularly to a winding structure of a stator coil in an ac generator for a vehicle.

### 2. Description of the Related Art

In association with an increase in vehicle load and a decrease in accessory mounting space, it has increasingly been desired to obtain a high output and a size reduction of an ac generator for a vehicle. In this respect, Japanese Patent Laid-open No. 6-165422 discloses an ac generator for a vehicle intended to suppress a temperature rise of a stator coil and magnetic noise caused by the high output power thereof.

A stator structure in this ac generator includes a stator core having six teeth at every two-pole pitch of a rotor and a stator coil wound around many teeth of the stator core. As shown in FIG. 8, the stator coil has a first three-phase stator coil group 91 of a 2π/3 short-pitch winding type and a second three-phase stator coil group 92 of a 2π/3 short-pitch winding type, which is shifted from the first three-phase stator coil group 91 in a winding direction by an electric angle of π/3 radians.

The first three-phase stator coil group 91 is composed of three first stator windings 91a, 91b, and 91c, and the second three-phase stator coil group 92 is composed of three second stator windings 92a, 92b, and 92c. By the use of the stator coil having such a winding structure, the winding length of the stator coil can be shortened to thereby suppress a heating value of the ac generator, and harmonic components contained in reaction magnetomotive forces generated in the operation of the ac generator can be canceled to thereby suppress magnetic noise.

However, as shown in FIG. 8, the conventional ac generator requires two rectifiers having three-phase rectifier circuits 101 and 102 for respectively rectifying the first three-phase stator coil group 91 and the second three-phase stator coil group 92. As a result, the number of parts is increased to cause an increase in product cost.

Document US 3,450,971 (corresponding to FR-A-1460142) generally discloses an 18-teeth/10-pole structure to reduce unwanted field flux harmonics of six poles. The winding pitch of the stator is not regular.

Object of the present invention is to provide a battery charging alternating current generator for a vehicle in which winding ends of first and second three-phase stator coil groups are connected in such a way that the harmonic components of reaction magnetomotive forces in the first and second three-phase stator coil groups are generated opposite in phase to each other and in which the overall structure is simplified.

The object is solved by the measures indicated in claim 1.

Each coil of the first three-phase stator coil group and a corresponding coil of the second three-phase stator coil group can be connected in parallel with each other. Each parallel circuit of the first three-phase stator coil group and the second three-phase stator coil group can form Y-connection of windings respectively or Δ-connection of windings respectively.

Each coil of the first three-phase stator coil group and a corresponding coil of the second three-phase stator coil group can be connected in series with each other. Each series circuit of the first three-phase stator coil group and the second three-phase stator coil group can form Y-connection of windings or Δ-connection of windings.

In the operation of the rotary electric machine, when a current flows in the stator coil and the rotor is rotated with the rotating shaft, the harmonic components of the reaction magnetomotive forces are generated in the first three-phase stator coil group and the second three-phase stator coil group. At this time, the phase of the harmonic components of the reaction magnetomotive force generated in the second three-phase stator coil group are opposite to the phase of the harmonic components of the magnetomotive force generated in the first three-phase stator coil group while the electromotive forces of in both stator coils are in the same phase. Accordingly, harmonic components contained in the reaction magnetomotive forces can be canceled to each other, thereby suppressing magnetic noise in the operation of the rotary electric machine.

Further, the first and second three-phase stator coil groups are of the 2π/3 short-pitch winding type. Accordingly, as compared with a stator coil of a full-pitch winding type with respect to the pole pitch of a rotor, the winding length of the stator coil in the present invention can be shortened, and an overlapping portion of windings in each of the first and second three-phase stator coil groups can be reduced to thereby increase an area of contact of a cooling air flow generated in the rotary electric machine with the stator coil groups. As a result, a temperature rise of each of the first and second three-phase stator coil groups can be suppressed, and the number of parts and the product cost can be reduced. Further, magnetic noise generating in the operation of the rotary electric machine can be reduced to thereby enhance noise reduction in the rotary electric machine. Further, a temperature rise of the stator coil can be suppressed to thereby effect high efficiency of the rotary electric machine.

### BRIEF DESCRIPTION OF THE DRAWINGS

The objects, features and characteristics of the present invention as well as the functions of related parts of the present invention will become clear from a study of the following detailed description, the appended claims and the drawings. In the drawings:
FIG. 1 is an electric circuit diagram showing the connection between a three-phase rectifier circuit of a rectifier and a stator coil according to a first preferred embodiment;
FIG. 2 is a sectional view showing the general structure of an ac generator for a vehicle;
FIG. 3 is an elevational view showing an essential part of a stator according to the first preferred embodiment;
FIG. 4 is a view illustrating a winding structure of a stator coil according to the preferred embodiment of the present invention;
FIG. 5 is an electric circuit diagram showing the connection between a three-phase rectifier circuit of a rectifier and a stator coil according to a second preferred embodiment;
FIG. 6 is an electric circuit diagram showing the connection between a three-phase rectifier circuit of a rectifier and a stator coil according to a third preferred embodiment;
FIG. 7 is an electric circuit diagram showing the connection between a three-phase rectifier circuit of a rectifier and a stator coil in an ac generator for a vehicle according to a fourth preferred embodiment of the present invention; and
FIG. 8 is a conventional electric circuit diagram showing the connection between a three-phase rectifier circuit of a rectifier and a stator coil.

### DETAILED DESCRIPTION OF THE PREFERRED EMBODIMENTS

Preferred embodiments of the present invention are described with reference to the appended drawings.

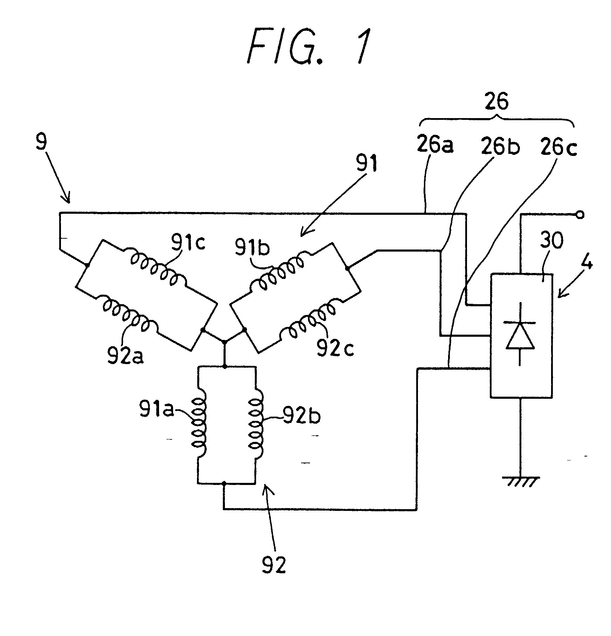

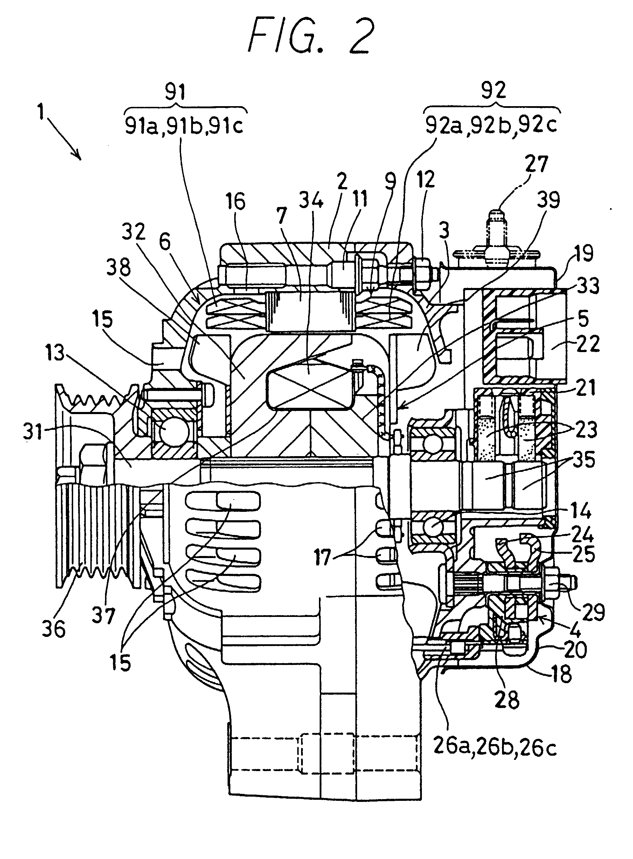

A first preferred embodiment of the present invention is described with reference to FIGS. 1 to 4.

An ac generator 1 for a vehicle is an alternator for charging a battery mounted on the vehicle and supplying electric power to electric devices (electric loads) mounted on the vehicle. The ac generator 1 is composed generally of a drive frame 2 forming an outer shell of the ac generator 1, a rear end frame 3 connected to the rear end of the drive frame 2, a rectifier unit 4 mounted on the rear end frame 3, a rotor 5 rotatably supported in these frames 2 and 3, and a stator 6 fixed to the inside surface of the drive frame 2.

### (Outer Frame Structure of ac Generator 1)

The drive frame 2 and the rear end frame 3 serve to support the rotor 5 and the stator 6 and also to mount the ac generator 1 to an engine. The drive frame 2 is formed of die-cast aluminium, and the stator 6 is fixed to the inside surface of the drive frame 2 by press fitting or the like. The rear end frame 3 is also formed of die-cast aluminium, and it is directly connected to the rear end of the drive frame 2 by fastening means such as a plurality of stud bolts 11 and nuts 12. The rotor 5 is rotatably supported through bearings 13 and 14 to the inner circumferences of the drive frame 2 and the rear end frame 3.

The drive frame 2 and the rear end frame 3 are formed with a plurality of air inlet openings 15 for introducing a cooling air into the frames 2 and 3 and a plurality of air outlet openings 16 and 17 for discharging the cooling air out of the frames 2 and 3. A rear end cover 18 for covering the rear end frame 3 is connected to the rear end of the rear end frame 3. The rear end cover 18 is formed with a plurality of air inlet openings 19 for introducing a cooling air into the cover 18 and a vent opening 20 for passing a cooling air to apply it onto the rectifier 4 to be hereinafter described.

A brush holder 21, a voltage regulator 22, the rectifier 4, etc. are provided between the rear end frame 3 and the rear end cover 18. The brush holder 21 serves to accommodate and hold two brushes 23. The voltage regulator 22 is an IC regulator which operates to turn on and off a switching device such as a transistor provided between a field coil 34 to be hereinafter described and a ground, thereby controlling an exciting current to make an output voltage of the ac generator 1 constant .

### (Structure of Rectifier 4)

The rectifier 4 is electrically connected to electric loads and a battery mounted on the vehicle to supply electric power to the electric loads and charge the battery. The rectifier 4 is provided with a three-phase full-wave rectifier circuit 30 for converting an ac current into a dc current. The three-phase full-wave rectifier circuit 30 constitutes an electric circuit in the present invention, and it is composed of three silicon diodes on the positive electrode side (semiconductor rectifier devices on the positive electrode side) respectively fixed in three recesses formed on a cooling fin 24 on the positive electrode side, and three silicon diodes on the negative electrode side (semiconductor rectifier devices on the negative electrode side) respectively fixed in three recesses formed on a cooling fin 25 on the negative electrode side.

The three-phase full-wave rectifier circuit 30 is electrically connected at its input to an ac output terminal 26 for detecting an ac output generated from a stator coil 9 of the stator 6, and is electrically connected at its output to a dc output terminal 27. The cooling fin 24 on the positive electrode side and the cooling fin 25 on the negative electrode side are fixed to the rear end frame 3 by a fastener 29 such as a bolt and nut, in combination with a terminal base 28 of electrically insulating resin molded to include part of ac output terminals 26a, 26b, and 26c and other connection terminals. The cooling fin 25 on the negative electrode side is in abutment against the rear end cover 18 on the body ground side.

### (Structure of Rotor 5)

The rotor 5 is one serving as a field system, and it is rotated integrally with a shaft 31 as a rotating shaft. The rotor 5 is composed generally of pole cores (magnetic poles) 32 and 33, a field coil 34, and two slip rings 35. A V-ribbed pulley 36 for transmitting engine torque to the shaft 31 is mounted at the front end of the shaft 31. The V-ribbed pulley 36 is connected through connecting means such as a belt to an output shaft of the engine.

A coil bobbin 37 is mounted in the center of the pole cores 32 and 33, and the field coil 34 is wound around the coil bobbin 37. When an exciting current flows in the field coil 34, a magnetic field is generated. That is, all claw portions of the pole 32 become N poles, and all claw portions of the pole core 33 become S poles. A cooling fan 38 for sucking a cooling air into the drive frame 2 is integrally mounted on an end surface of the pole core 32, and a cooling fan 39 for sucking a cooling air into the rear end frame 3 is integrally mounted on an end surface of the pole core 33.

The cooling fan 38 is an axial-flow fan for generating cooling air flows in the axial direction and the radial direction (centrifugal direction) of the shaft 31, whereas the cooling fan 39 is a centrifugal fan for generating a cooling air flow in the radial direction (centrifugal direction) of the shaft 31.

The two slip rings 35 are mounted on a rear end portion of the shaft 31, and the two brushes 23 slide on the outer circumferences of the two slip rings 35, respectively.

### (Structure of Stator 6)

The structure of the stator 6 will be described in detail with reference to FIGS. 1 to 4.

The stator 6 is composed generally of a stator core 7 opposed to the outer circumferences of the pole cores 32 and 33, and the stator coil 9 wound around many teeth formed on the inner circumference of the stator core 7 to induce a three-phase ac output in association with rotation of the rotor 5.

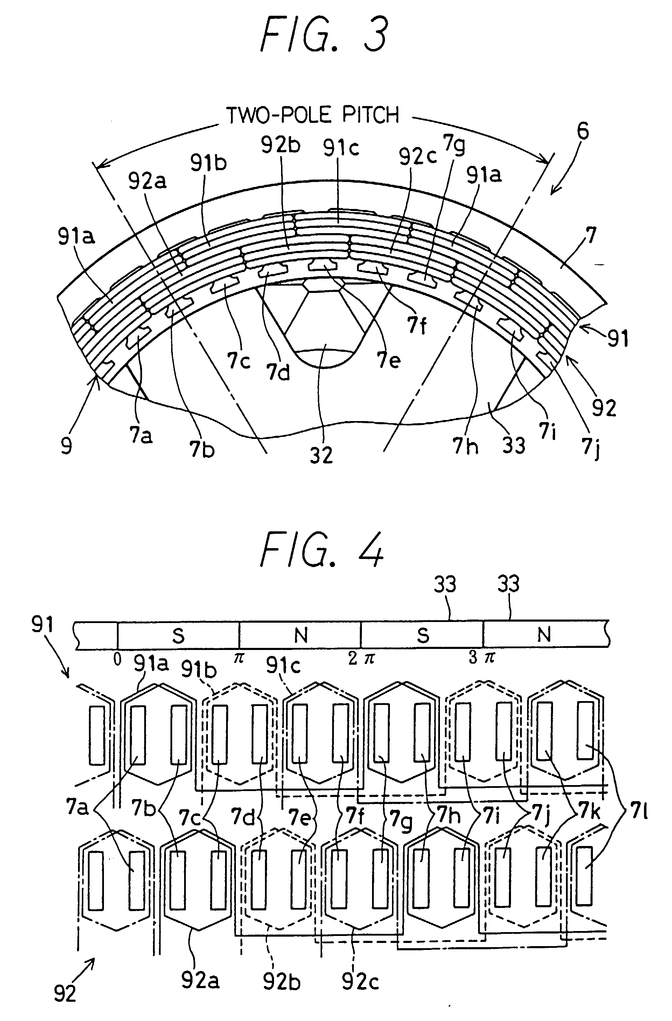

The stator core 7 is integrated with the drive frame 2 and the rear end frame 3 by press-fitting with the inner circumferences thereof. Accordingly, heat generated in the stator 6 is transmitted to the drive frame 2 and the rear end frame 3, thus improving cooling efficiency. The stator core 7 is formed by laminating a plurality of thin plates formed of a magnetic material. The stator core 7 forms a magnetic flux passage formed so that magnetic flux generated from the pole cores 32 and 33 of the rotor 5 effectively intersect first and second three-phase stator coil groups 91 and 92. As shown in FIG. 3, many teeth spaced at equal intervals are formed on the inner circumference of the stator core 7 in such a manner that six teeth are located at every two-pole pitch of the pole cores 32 and 33 of the rotor 5.

The stator coil 9 is composed of the first and second three-phase stator coil groups 91 and 92 of a 2π/3 short-pitch winding type such that coils are wound around many teeth at a 2π/3 short pitch. The second three-phase stator coil group 92 is provided on the radially inside of the first three-phase stator coil group 91.

The first three-phase stator coil group 91 is composed of three first stator windings (also called armature windings) 91a, 91b, and 91c.

As shown in FIG. 4, the first stator winding 91a is lap-wound around two adjacent teeth 7a and 7b and subsequently lap-wound around two adjacent teeth 7g and 7h jumping four contiguous teeth 7c, 7d, 7e, and 7f which are subsequent to the tooth 7b.

As shown in FIG. 4, the first stator winding 91b is lap-wound around the two adjacent teeth 7c and 7d and subsequently lap-wound around two adjacent teeth 7i and 7j jumping the four contiguous teeth 7e, 7f, 7g, and 7h which are subsequent to the tooth 7d.

As shown in FIG. 4, the first stator winding 91c is lap-wound around the two adjacent teeth 7e and 7f and subsequently lap-wound around two adjacent teeth 7k and 7l (seven el) jumping the four contiguous teeth 7g, 7h, 7i, and 7j which are subsequent to the tooth 7f. Such a winding pattern is repeated sequentially to obtain many cycles of the three first stator windings 91a to 91c wound around the many teeth of the stator core 7.

On the other hand, the second three-phase stator coil group 92 is composed of three second stator windings (also called armature windings) 92a, 92b, and 92c.

As shown in FIG. 4, the second stator winding 92a is shifted from the first stator winding 91a in the winding direction by an electric angle of π/3 radians, i.e., by one tooth. The second stator winding 92a is lap-wound around the two adjacent teeth 7b and 7c and subsequently lap-wound around the two adjacent teeth 7h and 7i jumping the four contiguous teeth 7d to 7g which are subsequent to the tooth 7c.

Similarly, the other second stator windings 92b and 92c are shifted from the first stator windings 91b and 91c, respectively, each in the winding direction by an electric angle of π/3 radians, i.e., by one tooth. Thus, the second stator windings 92a to 92c are sequentially repeatedly wound around the many teeth of the stator core 7 with a given winding pattern similar to the winding pattern of the first stator windings 91a to 91c.

### [Connection Structure of Stator Coil]

The connection structure between the three-phase rectifier circuit 30 of the rectifier 4 and the stator coil 9 in this preferred embodiment will now be described in detail with reference to FIG. 1.

The three first stator windings 91a to 91c are Y-connected together to form the first three-phase stator coil group 91. The winding end of each of the first stator windings 91a to 91c is connected through the ac output detecting terminal 26 to the three-phase rectifier circuit 30 of the rectifier 4. Similarly, the three second stator windings 92a to 92c are Y-connected together to form the second three-phase stator coil group 92.

The winding ends of the first three-phase stator coil group 91 and the second three-phase stator coil group 92 are connected so that the harmonic components of the reaction magnetomotive forces generated in the first and second three-phase stator coil groups 91 and 92 are opposite in phase to each other. That is, the winding end of the first stator winding 91a is connected to the winding end of the second stator winding 92b. The winding end of the first stator winding 91b is connected to the winding end of the second stator winding 92c. The winding end of the first stator winding 91c is connected to the winding end of the second stator winding 92a. Further, these winding ends of the first and second three-phase stator coil groups 91 and 92 are connected through the three ac output detecting terminals 26a to 26c to the three-phase rectifier circuit 30 of the rectifier 4. There is no difference in operation and effect between the presence and the absence of connection between a neutral point of the first three-phase stator coil group 91 and a neutral point of the second three-phase stator coil group 92.

### [Operation of First Preferred Embodiment]

The operation of the ac generator 1 having the above-mentioned winding structure of the stator coil 9 will now be described in brief with reference to FIGS. 1 to 4.

When engine torque is transmitted through a belt to the V-ribbed pulley 36, the rotor 5, or the shaft 31 is rotated. An external voltage is applied to the field coil 34 to allow an exciting current to flow in the field coil 34, thereby exciting the pole cores 32 and 33. Accordingly, all the lug portions of the pole core 32 become N poles, and all the lug portions of the pole core 33 become S poles. Then, a rotating field is generated about the stator core 7 of the stator 6 rotated relative to the rotor 5, thereby inducing an ac in the first three-phase stator coil group 91 and the second three-phase stator coil group 92. This three-phase ac is converted into a dc by the rectifier 4 to charge the battery and supply electric power to the electric loads mounted on the vehicle.

In association with rotation of the pole cores 32 and 33, the cooling fans 38 and 39 respectively mounted on the end surfaces of the pole cores 32 and 33 are similarly rotated. Accordingly, the rotation of the cooling fan 38 generates a cooling air flow from the air inlet openings 15 to the air outlet openings 16 in the drive frame 2. Further, the rotation of the cooling fan 39 generates a cooling air flow from the air inlet openings 19 and the vent opening 20 to the air outlet openings 16. Accordingly, heating members including the field coil 34, the rectifier 4, the first three-phase stator coil group 91, and the second three-phase stator coil group 92 are cooled by these cooling air flows.

### [Effect of First Embodiment]

As compared with the ac generator requiring two rectifiers (prior art), the number of parts can be reduced to thereby reduce the product cost of the ac generator 1. Accordingly, the cost of the vehicle on which such inexpensive ac generator 1 is mounted can be suppressed.

Further, in generation of electric energy from the ac generator 1, second and fourth harmonic components contained in the reaction magnetomotive forces generated in the first and second three-phase stator coil groups 91 and 92 are canceled to thereby reduce magnetic noise generating in the operation of the ac generator 1, thereby achieving noise reduction in the ac generator 1.

Further, as compared with a stator coil of a full-pitch winding type with respect to the pole pitch of a rotor, the winding length of the stator coil in this preferred embodiment can be shortened, and an overlapping portion of windings in each of the first and second three-phase stator coil groups 91 and 92 can be reduced to thereby increase an area of contact of the cooling air flow generated by the operation of the cooling fans 38 and 39 with the stator coil groups 91 and 92. As a result, a heating value of the stator coil 9 can be reduced to thereby suppress a temperature rise of the stator coil 9 and accordingly achieve a high output from the ac generator 1.

### [Second Preferred Embodiment]

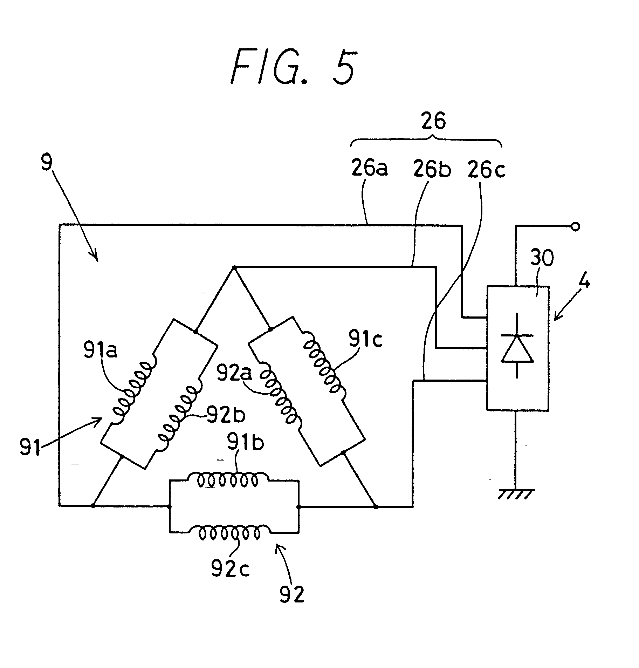

A second preferred embodiment of the present invention is described with reference to FIG. 5, which is a view showing the connection between a three-phase rectifier circuit of a rectifier and a stator coil in an ac generator for a vehicle according to the second preferred embodiment.

Three first stator windings 91a, 91b, and 91c are Δ -connected together to form a first three-phase stator coil group 91. The winding ends of the first stator coil windings 91a to 91c are connected through the ac output terminal 26 to a three-phase rectifier circuit 30 of a rectifier 4. Similarly, three second stator windings 92a, 92b, and 92c are Δ-connected together to form a second three-phase stator coil group 92.

The winding ends of the first three-phase stator coil group 91 and the second three-phase stator coil group 92 are connected together so that the harmonic component of the reaction magnetomotive forces generated in the first and second three-phase stator coil groups 91 and 92 are opposite in phase to each other. That is, the winding end of the first stator winding 91a is connected to the winding end of the second stator winding 92b. The winding end of the first stator winding 91b is connected to the winding end of the second stator winding 92c. The winding end of the first stator winding 91c is connected to the winding end of the second stator winding 92a. Further, these winding ends of the first and second three-phase stator coil groups 91 and 92 are connected through three ac output detecting terminals 26a to 26c to the three-phase rectifier circuit 30 of the rectifier 4.

Also in this preferred embodiment wherein the stator coil 9 has Δ-connection of windings, it is possible to prevent generation of harmonic components causing a circulating current circulating in the first and second three-phase stator coil groups 91 and 92. Accordingly, a heating value of the first and second three-phase stator coil groups 91 and 92 can be reduced to thereby suppress a temperature rise of the first and second three-phase stator coil groups 91 and 92.

### [Third Preferred Embodiment]

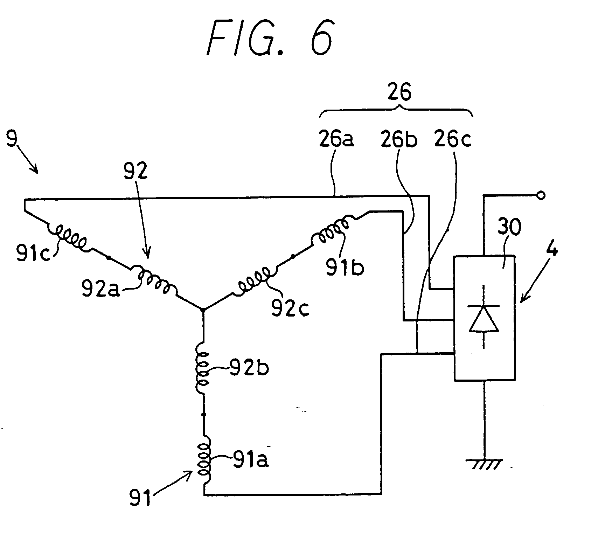

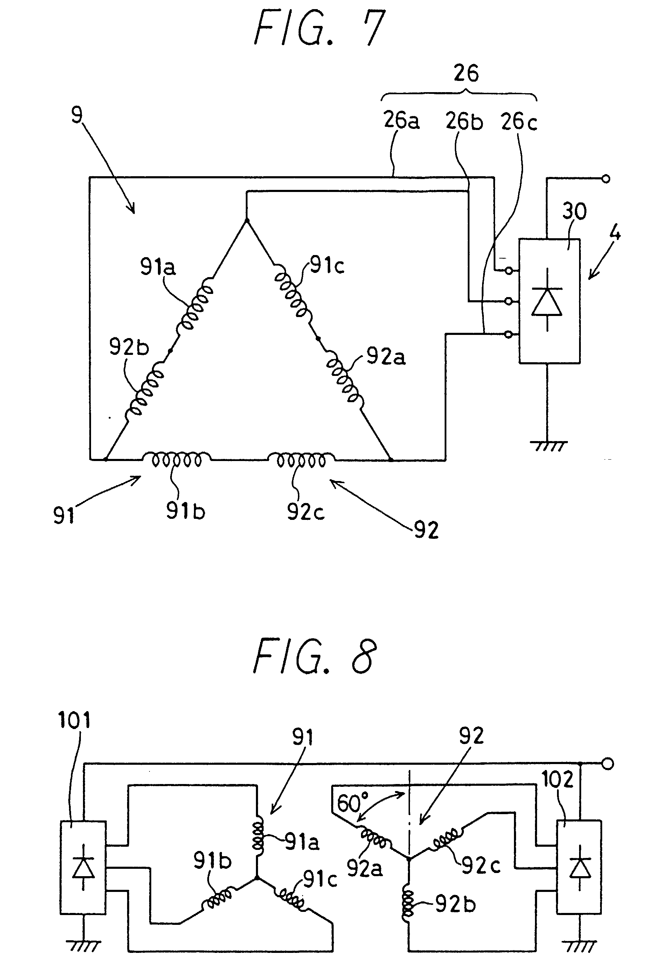

FIG. 6 shows a third preferred embodiment of the present invention, which is a view showing the connection between a three-phase rectifier circuit of a rectifier and a stator coil in an ac generator for a vehicle according to the third preferred embodiment.

In this preferred embodiment, a first three-phase stator coil group 91 and a second three-phase stator coil group 92 are connected in series with each other so that the harmonic components of the reaction magnetomotive forces generated in the first and second three-phase stator coil groups 91 and 92 are opposite in phase to each other. That is, three second stator windings 92a, 92b, and 92c are Y-connected together to form the second three-phase stator coil group 92, and each one of the first stator windings 91a, 91b and 91c is connected in series with one winding end of the second stator windings. That is, a second stator winding 92b is connected in series with one winding end of the first stator winding 91a, a second stator winding 92c is connected in series with one winding end of the first stator winding 91b, and a second stator winding 92a is connected in series with one winding end of the first stator winding 91c. The other winding ends of the first stator windings 91a to 91c are connected through three ac output detecting terminals 26a to 26c to a three-phase rectifier circuit 30 of a rectifier 4.

### [Fourth Preferred Embodiment]

FIG. 7 shows a fourth preferred embodiment of the present invention, which is a view showing the connection between a three-phase rectifier circuit of a rectifier and a stator coil in an ac generator for a vehicle according to the fourth preferred embodiment.

Also in this preferred embodiment, a first three-phase stator coil group 91 and a second three-phase stator coil group 92 are connected in series with each other so that the harmonic component of the reaction magnetomotive forces generated in the first and second three-phase stator coil groups 91 and 92 are opposite in phase to each other while the electromotive forces generated in both stator coil groups are in the same phase.

That is, one winding end of a first stator winding 91a and one winding end of a second stator winding 92b are connected in series; one winding end of a first stator winding 91b and one winding end of a second stator winding 92c are connected in series; and one winding end of a first stator winding 91c and one winding end of a second stator winding 92a are connected in series. Further, the other winding end of the first stator winding 91a and the other winding end of the first stator winding 91c are connected together; the other winding end of the first stator winding 91b and the other winding end of the second stator winding 92b are connected together; and the other winding end of the second stator winding 92a and the other winding end of the second stator winding 92c are connected together, thus forming Δ-connection. The other winding ends of the first and second stator windings 91a to 91c and 92a to 92c are connected through three ac output detecting terminals 26a to 26c to a three-phase rectifier circuit 30 of a rectifier 4.

### [Modification]

While the present invention has been applied to an ac generator for a vehicle (a synchronous generator for a vehicle) in the above preferred embodiments, the present invention may be applied to a synchronous motor for a vehicle. In this case, the electronic circuit is an inverter circuit in which, for example, six MOSFETs are subjected to PWM control to generate a three-phase ac output and allow a current to flow in the first and second three-phase stator coil groups 91 and 92. Further, the present invention may be applied to a brushless rotary electric machine for a vehicle, such as a brushless ac generator for a vehicle or a brushless motor for a vehicle.

## Claims

1. Battery charging alternating current generator for a vehicle comprising:
three-phase output terminals (26a, 26b, 26c);
a rotor (5) having a plurality of magnetic poles (32) adapted to rotate integrally with a rotating shaft;
a stator core (7) having six teeth at every two-pole pitch of said rotor;
a first three-phase stator coil group (91) being disposed at outer circumference of a stator (6) and having a plurality of coils (91a, 91b, 91c) lap-wound around said teeth of said stator core (7) at a 2π/3 short-pitch in electric angle;
a second three-phase stator coil group (92) being disposed radially before said first three-phase stator coil group and having a plurality of coils (92a, 92b, 92c) lap-wound around said teeth of said stator core at a 2π/3 short-pitch in electric angle, said second three-phase stator coil group (92) being shifted from said first three-phase stator coil group (91) by an electric angle of π/3; and
merely one three-phase-full-wave rectifier (4) connected to said three-phase terminals (26a, 26b, 26c) and to a battery; wherein
each coil (91a, 91b, 91c) of said first three-phase stator coil group and a corresponding coil (92b, 92c, 92a) of said second three-phase stator coil group are connected so that harmonic components of reaction magnetomotive forces generated in said first and second three-phase stator coil groups (91, 92) become opposite in phase to each other while electromotive forces of said first and second three-phase stator coil groups are in the same phase, and
said first and second three-phase coil groups (91, 92) compose a stator coil (9) connected to said three-phase terminals (26a, 26b, 26c).

2. Generator according to claim 1, wherein each coil (91a, 91b, 91c) of said first three-phase stator coil group (91) and a corresponding coil (92b, 92c, 92a) of said second three-phase stator coil group (92) are connected in parallel with each other.

3. Generator according to claim 2, wherein each parallel circuit (91a-92b, 91b-92c, 91c-92a) of said first three-phase stator coil group (91) and said second three-phase stator coil group (92) form Y-connection of windings respectivly.

4. Generator according to claim 2, wherein each parallel circuit (91a-92b, 91b-92c, 91c-92a) said first three-phase stator coil group (91) and said second three-phase stator coil group (92) form Δ-connection of windings respectively.

5. Generator according to claim 1, wherein each coil (91a, 91b, 91c) of said first three-phase stator coil group (91) and a corresponding coil (92b, 92c, 92a) of said second three-phase stator coil group (92) are connected in series with each other.

6. Generator according to claim 5, wherein each series circuit (91a-92b, 91b-92c, 91c-92a) of said first three-phase stator coil group (91) and said second three-phase stator coil group (92) form Y-connection of windings.

7. Generator according to claim 5, wherein each series circuit (91a-92b, 91b-92c, 91c-92a) of said first three-phase stator coil group (91) and said second three-phase stator coil group (92) form Δ-connection of windings.

## Patentansprüche

1. Batterieladewechselstromgenerator für ein Fahrzeug mit:
Dreiphasenausgangsanschlüssen (26a, 26b, 26c);
einem Rotor (5), welcher eine Mehrzahl von Magnetpolen (32) aufweist, die für eine Rotation integriert mit einer Rotationswelle angepasst sind;
einem Statorkern (7), welcher sechs Zähne an jeder Zweipolteilung des Rotors aufweist;
einer ersten Dreiphasenstatorspulengruppe (91), welche an einem äußeren Umfang eines Stators (6) angeordnet ist und eine Mehrzahl von Spulen (91a, 91b, 91c) aufweist, welche überlappend um die Zähne des Statorkerns (7) an einer 2π/3-Kurzteilung in einem elektrischen Winkel gewickelt sind;
einer zweiten Dreiphasenstatorspulengruppe (92), welche radial vor der ersten Dreiphasenstatorspulengruppe angeordnet ist und eine Mehrzahl von Spulen (92a, 92b, 92c) aufweist, welche überlappend um die Zähne des Statorkerns an einer 2π/3-Kurzteilung in einem elektrischen Winkel gewickelt sind, wobei die zweite Dreiphasenstatorspulengruppe (92) um einen elektrischen Winkel von π/3 von der ersten Dreiphasenstatorspulengruppe (91) verschoben ist; und
lediglich einem Dreiphasenvollweggleichrichter (4), welcher mit den Dreiphasenanschlüssen (26a, 26b, 26c) und einer Batterie verbunden ist; wobei
jede Spule (91a, 91b, 91c) der ersten Dreiphasenstatorspulengruppe und eine entsprechende Spule (92b, 92c, 92a) der zweiten Dreiphasenstatorspulengruppe verbunden sind, so dass harmonische Komponenten von in den ersten und zweiten Dreiphasenstatorspulengruppen (91, 92) erzeugten magnetomotorischen Reaktionskräften bezüglich der Phase zueinander entgegengesetzt werden, während elektromotorische Kräfte der ersten und zweiten Dreiphasenstatorspulengruppen dieselbe Phase besitzen, und
die ersten und zweiten Dreiphasenspulengruppen (91, 92) eine Statorspule (9) bilden, welche mit den Dreiphasenanschlüssen (26a, 26b, 26c) verbunden ist.

2. Generator nach Anspruch 1, dadurch gekennzeichnet, dass jede Spule (91a, 91b, 91c) der ersten Dreiphasenstatorspulengruppe (91) und eine entsprechende Spule (92b, 92c, 92a) der zweiten Dreiphasenstatorspulengruppe (92) parallel miteinander verbunden sind.

3. Generator nach Anspruch 2, dadurch gekennzeichnet, dass jede Parallelschaltung (91a-92b, 91b-92c, 91c-92a) der ersten Dreiphasenstatorspulengruppe (91) und der zweiten Dreiphasenstatorspulengruppe (92) eine Y-Verbindung von Wicklungen jeweils bilden.

4. Generator nach Anspruch 2, dadurch gekennzeichnet, dass jede Parallelschaltung (91a-92b, 91b-92c, 91c-92a) der ersten Dreiphasenstatorspulengruppe (91) und der zweiten Dreiphasenstatorspulengruppe (92) Δ-Verbindung von Wicklungen jeweils bilden.

5. Generator nach Anspruch 1, dadurch gekennzeichnet, dass jede Spule (91a, 91b, 91c) der ersten Dreiphasenstatorspulengruppe (91) und eine entsprechende Spule (92b, 92c, 92a) der zweiten Dreiphasenstatorspulengruppe (92) in Serie miteinander verbunden sind.

6. Generator nach Anspruch 5, dadurch gekennzeichnet, dass jede Serienschaltung (91a-92b, 91b-92c, 91c-92a) der ersten Dreiphasenstatorspulengruppe und der zweiten Dreiphasenstatorspulengruppe (92) eine Y-Verbindung von Wicklungen bilden.

7. Generator nach Anspruch 5, dadurch gekennzeichnet, dass jede Serienschaltung (91a-92b, 91b-92c, 91c-92a) der ersten Dreiphasenstatorspulengruppe (91) und der zweiten Dreiphasenstatorspulengruppe (92) eine Δ-Verbindung von Wicklungen bilden.

## Revendications

1. Générateur de courant alternatif de charge de batterie destiné à un véhicule comprenant :
des bornes de sortie triphasée (26a, 26b, 26c),
un rotor (5) comportant une pluralité de pôles magnétiques (32) conçu pour tourner de façon solidaire avec un arbre tournant,
un noyau de stator (7) comportant six dents pour chaque pas de deux pôles dudit rotor,
un premier groupe de bobinages de stator triphasé (91) disposé au niveau de la circonférence extérieure d'un stator (6) et comportant une pluralité de bobinages (91a, 91b, 91c) enroulés en spires autour desdites dents dudit noyau de stator (7) suivant un pas court de 2π/3 en angle électrique,
un second groupe de bobinages de stator triphasé (92) disposé suivant le rayon avant ledit premier groupe de bobinages de stator triphasé et comportant une pluralité de bobinages (92a, 92b, 92c) enroulés en spires autour desdites dents dudit noyau de stator suivant un pas court de 2π/3 en angle électrique, ledit second groupe de bobinages de stator triphasé (92) étant décalé par rapport audit premier groupe de bobinages de stator triphasé (91) d'un angle électrique de π/3, et
seulement un redresseur pleine onde triphasé (4) relié auxdites bornes triphasées (26a, 26b, 26c) et à une batterie, dans lequel
chaque bobinage (91a, 91b, 91c) dudit premier groupe de bobinages de stator triphasé et un bobinage correspondant (92b, 92c, 92a) dudit second groupe de bobinages de stator triphasé sont reliés de façon que des composantes d'harmonique des forces de réaction magnétomotrice générées dans lesdits premier et second groupes de bobinages de stator triphasé (91, 92) se trouvent de phase opposée l'une à l'autre tandis que les forces électromotrices desdits premier et second groupes de bobinages de stator triphasé se trouvent dans la même phase, et
lesdits premier et second groupes de bobinages triphasés (91, 92) composent un bobinage de stator (9) relié auxdites bornés triphasées (26a, 26b, 26c).

2. Générateur selon la revendication 1, dans lequel chaque bobinage (91a, 91b, 91c) dudit premier groupe de bobinages de stator triphasé (91) et un bobinage correspondant (92b, 92c, 92a) dudit second groupe de bobinages de stator triphasé (92) sont reliés l'un à l'autre en parallèle.

3. Générateur selon la revendication 2, dans lequel chaque circuit parallèle (91a-92b, 91b-92c, 91c-92a) dudit premier groupe de bobinages de stator triphasé (91) et dudit second groupe de bobinages de stator triphasé (92) forment une connexion d'enroulements en Y respectivement.

4. Générateur selon la revendication 2, dans lequel chaque circuit parallèle (91a-92b, 91b-92c, 91c-92a) dudit premier groupe de bobinages de stator triphasé (91) et dudit second groupe de bobinage de stator triphasé (92) forment une connexion d'enroulement en Δ, respectivement.

5. Générateur selon la revendication 1, dans lequel chaque bobinage (91a, 91b, 91c) dudit premier groupe de bobinages de stator triphasé (91) et un bobinage correspondant (92b, 92c, 92a) dudit second groupe de bobinages de stator triphasé (92) sont reliés l'un à l'autre en série.

6. Générateur selon la revendication 5, dans lequel chaque circuit série (91a-92b, 91b-92c, 91c-92a) dudit premier groupe de bobinages de stator triphasé (91) et dudit second groupe de bobinages de stator triphasé (92) forment une connexion d'enroulements en Y.

7. Générateur selon la revendication 5 , dans lequel chaque circuit série (91a-92b, 91b-92c, 91c-92a) dudit premier groupe de bobinages de stator triphasé (91) et dudit second groupe de bobinages de stator triphasé (92) forment une connexion d'enroulements en Δ.
